Europäisches Patentamt

European Patent Office

Office européen des brevets

(19)

(11) Numéro de publication: **0 152 329 B1**

(12) **FASCICULE DE BREVET EUROPEEN**

(45) Date de publication de fascicule du brevet:
09.10.91

(51) Int. Cl.⁵: **H01F 10/30**, G11B 5/704, G11B 5/64

(21) Numéro de dépôt: 85400139.3

(22) Date de dépôt: 28.01.85

(54) **Support pour disque magnétique d'enregistrement et son procédé de fabrication.**

(30) Priorité: 03.02.84 FR 8401883

(43) Date de publication de la demande:
21.08.85 Bulletin 85/34

(45) Mention de la délivrance du brevet:
09.10.91 Bulletin 91/41

(84) Etats contractants désignés:
BE CH DE FR GB IT LI NL

(56) Documents cités:
EP-A- 0 054 640
EP-A- 0 055 819

IBM TECHNICAL DISCLOSURE BULLETIN, vol. 22, no. 11, avril 1980, pages 5055-5056, New York, US; L.A. CAPUANO et al.: "Substrate surface conditioning for magnetic oxide coated disks"

IBM TECHNICAL DISCLOSURE BULLETIN, vol. 25, no. 5, octobre 1982, pages 2453-2454, New York, US; G.A. MOCK et al.: "Planarizing coating using PMR polyimides"

(73) Titulaire: COMMISSARIAT A L'ENERGIE ATO-MIQUE Etablissement de Caractère Scientifique Technique et Industriel
31/33, rue de la Fédération
F-75015 Paris(FR)

(72) Inventeur: Lazzari, Jean-Pierre
45, Chemin de Malanot
F-38700 Corenc(FR)

(74) Mandataire: Mongrédien, André et al
c/o BREVATOME 25, rue de Ponthieu
F-75008 Paris(FR)

## Description

La présente invention a pour objet un nouveau support pour disque magnétique d'enregistrement et son procédé de fabrication. Elle trouve une application notamment dans la fabrication des mémoires d'ordinateurs à disques magnétiques.

Les suoports pour disques d'enregistrement sont des galettes métalliques munies d'un trou central et découpées dans une feuille métallique de quelques millimètres d'épaisseur, le plus fréquemment en alliage léger à base d'aluminium.

Ces supports subissent, avant d'être recouverts par la couche magnétique devant contenir l'information, une préparation mécanique et chimique qui leur confère un état de surface de qualité suffisante pour que la couche magnétique les recouvrant présente un minimum de défauts.

La préparation mécanique consiste généralement en un dressage des deux faces par une opération de tournage. Des microsillons sont ainsi provoqués, qui présentent des micro-aspérités pouvant être éliminées ensuite par polissage fin ou par oxydation anodique.

Malgré le coût élevé de ces opérations, l'état de surface obtenu n'est finalement pas de qualité suffisante pour permettre le dépôt de couches magnétiques contenant l'information avec une densité d'enregistrement importante.

Pour augmenter cette densité, il a été proposé de recouvrir ces disques métalliques d'une couche de polymère. Cette couche est d'abord étendue sous forme de prépolymère au moyen d'une opération de centrifugation, puis chauffée pour être polymérisée.

Une telle technique est décrite, par exemple, dans la publication de brevet européen n° 0 055 819 publiée le 14 juillet 1982 pour "A method for providing a layer of polymeric material on a substrate".

Si une telle technique améliore la qualité des supports obtenus, elle n'est cependant pas exempte de défauts. En effet, on observe une durée de vie limitée pour les disques magnétiques qu'elle permet de réaliser. Le Demandeur estime que la perte partielle et progressive de l'information contenue dans de tels disques provient de ce que la couche de polymère est une matière relativement molle et que la couche magnétique, qui recouvre le polymère, peut se déformer sous la pression exercée par la tête de lecture lorsque celle-ci vient à frotter sur des poussières qui se déposent inévitablement sur les faces du disque. Ces déformations répétées finissent par détruire des secteurs entiers de la couche magnétique.

Le Demandeur a eu l'idée de perfectionner ces supports en ajoutant, sur la couche organique lisse préalablement déposée sur le disque métallique, une couche mince d'un matériau dur. Une nouvelle surface lisse est ainsi obtenue, mais avec une dureté qui permet d'éviter l'inconvénient des supports antérieurs. En pratique, le matériau utilisé pour constituer cette couche dure est du silicate hydraté $Si(OH)_4$ ou de la silice.

Cette couche dure a de préférence une épaisseur comprise entre 0,1 et quelques microns (par exemple 5 microns). La couche organique est de préférence une résine.

La présente invention a également pour objet un procédé de réalisation d'un tel support. Dans ce procédé, on dépose par centrifugation une couche organique sur un disque métallique, et selon l'invention, on dépose en outre, sur la couche organique, une couche mince et dure d'un matériau à base de silicate hydraté ou de silice.

Dans un premier mode de réalisation, la couche dure est déposée par centrifugation, en une ou plusieurs opérations entrecoupées de recuits.

Dans un second mode de réalisation, la couche dure est déposée par décomposition gazeuse du silane en présence d'un plasma.

D'autres caractéristiques et avantages de l'invention ressortiront de la description qui va suivre, donnée à titre illustratif mais nullement limitatif, en référence aux dessins annexés, sur lesquels :
- la figure 1 montre une coupe agrandie d'un support selon l'invention,
- la figure 2 montre la section d'un disque magnétique .obtenu à l'aide du support de l'invention.

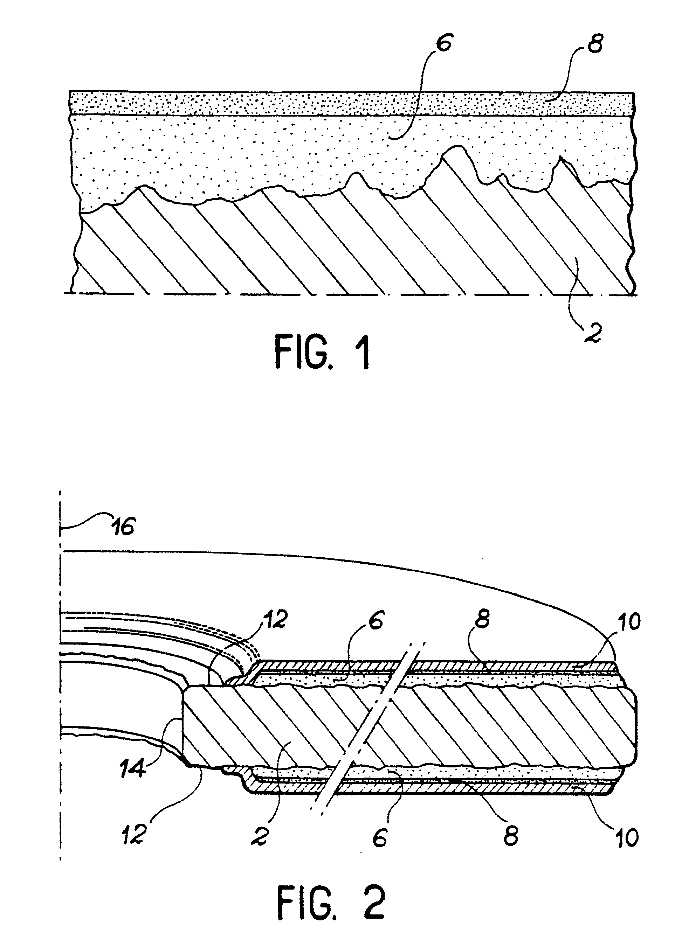

Sur la figure 1, est représentée une vue agrandie d'une coupe d'un disque d'aluminium portant la référence générale 2. Après des opérations de dégraissage, de nettoyage et de brossage habituelles, une couche 6, qui est de préférence une résine semblable à celle qu'on utilise en photolithographie, est déposée par centrifugation. L'épaisseur totale de la résine doit être telle qu'elle recouvre totalement les aspérités de la surface du disque 2. Elle est comprise entre 1 et 30 $\mu$m. Pour ce faire, la résine peut être étendue en plusieurs passes, séparées par un recuit à une température comprise entre 100 et 150° C, afin de stabiliser la résine. L'enduction en plusieurs passes a pour effet de minimiser le nombre de défauts de surface. Après avoir atteint l'épaisseur reguise, qui se situe entre 1 et 30 $\mu$m selon la rugosité de la surface du support, la couche 6 subit une cuisson à plus haute température pouvant atteindre 220° C, afin de réticuler la couche, ce qui augmente sa dureté et sa stabilité.

La couche de résine 6 a essentiellement un rôle de nivellement. Cependant, comme expliqué plus haut, sa dureté ne permet pas d'accepter la couche magnétique contenant l'information, qui est très fine, et qui doit encaisser les chocs de la tête d'écriturelecture durant son vol ou pendant les phases d'atterrissage et de décollage.

La couche 8, assure,par sa dureté, une base stable à la couche magnétique contenant l'information. Ce matériau constituant la couche 8 est du silicate hydraté (avec ou sans radical organique) déposé sous forme liquide, par centrifugation et cuisson à une température comprise entre 100 et 250° C. L'épaisseur de la couche dure est comprise entre 0,1 et quelques $\mu$m. Afin de minimiser le nombre de défauts de surface, il est préférable de déposer la couche dure en plusieurs passes entrecoupées de cuissons.

La couche dure 8 peut être également de la silice, laquelle est alors déposée par décomposition gazeuse de silane, en présence de plasma.

La figure 2 représente, en coupe, un disque magnétique obtenu à partir du support de l'invention, par adjonction d'une couche magnétique 10. En général, les deux faces du disque métallique 2 sont traitées de la même manière.

Une couronne de garde 12 située autour d'un trou central 14, près de l'axe 16 du disque, est réalisée par photolithographie, afin de laisser à nu la surface métallique du disque 2. Cette couronne de garde 12 a un double but :
- permettre au moyeu de tenue du disque (non représenté) de serrer ce dernier sur une surface mécaniquement stable (les couches 8 et 6 risqueraient en effet de se craqueler sous la pression et de créer de fines particules qui pourraient perturber le vol de la tête) ;
- permettre une évacuation, par le disque 2, des charges électriques qui pourraient s'accumuler au cours de la rotation de l'ensemble, dans la couche magnétique ; celle-ci recouvrira donc partiellement la couronne 12.

## Revendications

1. Support pour disque magnétique d'enregistrement, comprenant un disque métallique (2) recouvert par une couche organique (6), caractérisé par le fait qu'il comprend en outre, sur la couche organique, une couche mince dure (8) d'un matériau à base de silicate hydraté ou de silice.

2. Support selon la revendication 1, caractérisé par le fait que la couche dure (8) a une épaisseur comprise entre 0,1 et quelques $\mu$m.

3. Support selon la revendication 1, caractérisé par le fait que la couche organique est une résine photosensible.

4. Support selon la revendication 1, caractérisé en ce que le disque métallique (2) comprend, en son centre, une zone en forme de couronne (12), non recouverte par les couches organique (6) et dure (8), mais recouverte partiellement par la couche magnétique (10).

5. Procédé de réalisation d'un support pour disque magnétique d'enregistrement selon la revendication 1, dans lequel on dépose par centrifugation une couche organique (6) sur un disque métallique (2), caractérisé par le fait qu'on dépose en outre, sur la couche organique (6), une couche mince et dure (8) d'un matériau à base de silicate hydraté ou de silice.

6. Procédé selon la revendication 5, caractérisé par le fait que la couche dure (8) étant du silicate hydraté, elle est déposée par centrifugation.

7. Procédé selon la revendication 5, caractérisé par le fait que la couche dure (8) étant de la silice, elle est déposée par décomposition gazeuse du silane en présence d'un plasma.

## Claims

1. Support for a magnetic recording disk comprising a metal disk (2) covered by an organic coating (6), characterized in that it also comprises, on the organic coating, a thin, hard coating (8) of a material based on hydrous silicate or silica.

2. Support according to claim 1, characterized in that the hard coating (8) has a thickness between 0.1 and a few $\mu$m.

3. Support according to claim 1, characterized in that the organic coating is of a photosensitive resin.

4. Support according to claim 1, characterized in that the metal disk (2) comprises, in its centre, a ring-like area (12), which is not covered by the organic coating (6) and the hard coating (8), but which is partly covered by the magnetic coating (10).

5. Process for producing a support for a magnetic recording disk according to claim 1, in which an organic coating (6) is deposited on a metal disk (2) by centrifuging, characterized in that on the organic coating (6) is also deposited a thin, hard coating (8) of a material based on hydrous silicate or silica.

6. Process according to claim 5, characterized in that the hard coating (8) is of hydrous silicate and is deposited by centrifuging.

7. Process according to claim 5, characterized in that the hard coating (8) is of silica and is deposited by the gaseous decomposition of silane in the presence of a plasma.

**Patentansprüche**

1. Träger für eine magnetische Aufzeichnungsplatte, mit einer metallischen Scheiber oder Platte (2), die von einer organischen Schicht (6) überdeckt ist, dadurch gekennzeichnet, daß sie weiterhin auf der organischen Schicht eine harte, dünne Schicht (8) eines Materials auf das Basis von hydriertem Silikat oder Kieselerde aufweist.

2. Träger nach Anspruch 1, dadurch gekennzeichnet, daß die harte, dünne Schicht (8) eine Dicke aufweist zwischen 0,1 und einigen µm.

3. Träger nach Anspruch 1, dadurch gekennzeichnet, daß die organische Schicht ein fotoempfindliches Harz ist.

4. Träger nach Anspruch 1, dadurch gekennzeichnet, daß die Metallscheibe (2) in ihrem Zentrum eine Zone in Form eines Kranzes (12) aufweist, der nicht von den organischen (6) und harten (8) Schichten bedeckt ist, jedoch teilweise durch die magnetische Schicht (10) bedeckt ist.

5. Verfahren zur Herstellung eines Trägers für magnetische Aufzeichnungsplatten nach Anspruch 1, bei dem durch Zentrifugieren eine organische Schicht (6) auf eine metallische Scheibe oder Platte (2) aufgebracht wird, dadurch gekennzeichnet, daß weiterhin auf die organische Schicht (6) eine dünne und harte Schicht (8) eines Materials auf der Basis eines hydrierten Silikats oder von Kieselerde aufgebracht wird.

6. Verfahren nach Anspruch 5, dadurch gekennzeichnet, daß die harte Schicht (8), die aus hydriertem Silikat gebildet ist, durch Zentrifugieren aufgebracht wird.

7. Verfahren nach Anspruch 5, dadurch gekennzeichnet, daß die harte Schicht (8), die aus Kieselerde besteht, durch gasförmige Zersetzung von Silan bei Vorhandensein eines Plasmas aufgebracht wird.

FIG. 1

FIG. 2